# EUROPEAN PATENT APPLICATION

(11) **EP 3 561 361 A1**
(43) Date of publication of application: **30.10.2019**
(21) Application number: 18169690.7
(22) Date of filing: 27.04.2018
(51) Int. Cl.: F16L 37/62, G01M 3/02, G01M 3/28

(54) **LEAK DETECTION EQUIPMENTS FOR HOSES**

(71) Applicant: RTC TEC BAGLANTI ELEMANLARI MEDIKAL MAKINE METAL PLASTIK VE INSAAT SANAYI VE TICARET ANONIM SIRKETI, Tuzla, Istanbul (Anadolu) (TR)
(72) Inventor: KÜÇÜKERUGURLU, MUSTAFA, Istanbul (TR)
(74) Representative: Yamankaradeniz, Kemal

(57) **Abstract**

The invention relates to a leak detection equipment for hoses (40) comprising a main frame (10) intended to be used for checking hoses (40) for leaks.

## Description

### Technical Field

The invention relates to apparatuses intended to be used for testing hoses.

The invention in particular relates to apparatuses intended to be used for checking engine hoses used in automotive industry for leaks.

### Prior Art

Hoses are used at fuel, radiator, engine etc. parts in the automotive industry. These hoses are generally made of rubber. It has utmost importance that these hoses has to be manufactured faultless. Especially during the production phase the hoses which are produced improperly has the risk to damage all automobile parts, especially the engine. Therefore, it is necessary to check the hoses during manufacturing. These checks are in general performed by operators using some test equipments. These test equipments are not suitable for automated control and therefore, makes the checking process complicated. This caused to slow down the operator and delay the test process.

Various types of detection equipments have been developed in order to solve the problems. For example application no TR2012/08160 discloses a quality control testing device intended to be used for quality control and testing all types of hoses manufactured industrially, especially radiator hoses used in automotive industry. The mentioned testing device comprises an air injected end screw fixed onto a cylindrical inner pipe, an inflating part which conserves the air injected end screw, an eye screw which fixes the inflating part on the cylindrical inner pipe, 15 jaw sheet bars placed on the jaw sheet bars seats on the cylindrical inner pipe to enclose the eye screw, a circular spring which connects 15 jaw sheet bars to the cylindrical inner pipe, a cylindrical outer pipe which conserves the cylindrical inner pipe and the parts positioned thereon, a main L-support onto which the cylindrical inner pipe is mounted, and a piston which is fixed on the L-support and drives the cylindrical outer pipe. However, the mentioned project does not reduce time losses. And also there is nothing developed to ease the operator's task.

Application no US2012266660 discloses a leak detection system with secure sealing mechanism comprising a sealing mechanism configured to matingly interconnect about the opening defined about the distal-most end of the air induction system ducting or hose. However, the mentioned application lacks elements aimed towards reducing time losses or easing the operator's task. Therefore, all of the mentioned problems have made it necessary to make a development in the related technical field.

### Brief Description of the Invention

The invention relates to equipments intended to be used for detecting leaks on engine hoses used in automotive industry, in order to overcome the aforementioned disadvantages and offer further advantages in the related technical field.

The main object of the invention is to provide a detection equipment for checking engine hoses used in automotive industry for air and water leaks rapidly and safely, without time losses.

Another object of the invention is to provide a detection equipments which allows checking engine hoses used in automotive industry and which is compatible with automation.

Another object of the invention is to provide a detection equipments for checking hoses used in industries other than automotive industry.

In order to achieve the aforementioned purposes above those that will be apparent by the detailed description given below, the invention provides a leak detection equipments for hoses, in order to be used for checking hoses for leaks by connecting the hose to a compressed air source, comprising a main frame.

All of the features and advantages of the present invention shall become apparent with the appended drawings and the detailed description given below with reference to those drawings; therefore, assessment should be based on the detailed description and the appended drawings.

### Brief Description of Drawings

- Figure 1a: Is a general view of the invention.
- Figure 1b: Is a front view of the invention.
- Figure 1c: Is a side view of the invention.
- Figure 2: Is a cross-section view of the invention.
- Figure 3a: Is a cross-section view of the invention before the hose is clamped by the clamp pressing parts.
- Figure 3b: Is a cross-section view of the invention after the hose is clamped by the clamp pressing parts.
- Figure 4: Is a general view of the invention with a hose attached.

### Reference Numbers Used in Drawings

- 10: Mainframe
- 11: First air inlet port
- 12: Second air inlet port
- 20: Hose connection mechanism
- 21: Clamp mechanism
- 22: Clamp pressing parts
- 23: Piston
- 24: Piston shaft
- 30: Support mechanism
- 40: Hose

### Detailed Description of the Invention

Herein detailed description relates to equipments intended to be used for checking engine hoses (40) used in automotive industry for leaks. However, the invention can also be used for checking fuel, radiator etc. hoses of automobiles and other similar hoses. The invention allows checking hoses for air and water leaks. Preferred embodiments of the materials used in the invention are only presented for exemplary purposes and are not limiting.

The invention is a leak detection equipment for hoses (40) comprising a main frame (10) in order to check the hose (40) for leaks by attaching it to a compressed air source, comprising,
- a hose connection mechanism (20) which establishes the connection of the hose (40) intended to be checked into the main frame,
- a clamp mechanism (21) which clamps the hose (40) after being attached to the hose connection mechanism (20),
- a piston (23) which drives the clamp mechanism (21) with the air received from the compressed air source in order to ensure clamping of the hose by the clamp mechanism (21).

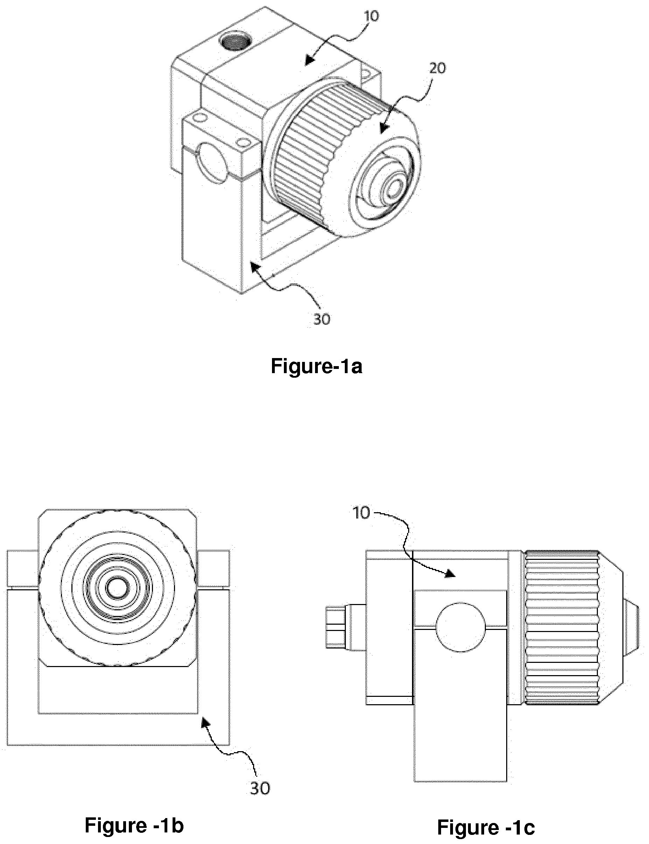

Figure 1a shows a general view of the invention. Here, the invention comprises a main frame (10) for checking the hoses (40) for leaks and a hose connection mechanism (20) where the hose (40) intended to be checked is attached for testing. The hose connection mechanism (20) has a circular form which is compatible with the round cross-section of the hose (40). Figure 1b shows a front view of the invention and figure 1c shows a side view. A support mechanism (30) which supports the main frame (10) and the hose connection mechanism (20) is provided. By means of the support mechanism (30), the main frame (10) and the hose connection mechanism (20) can be set at any angle and position.

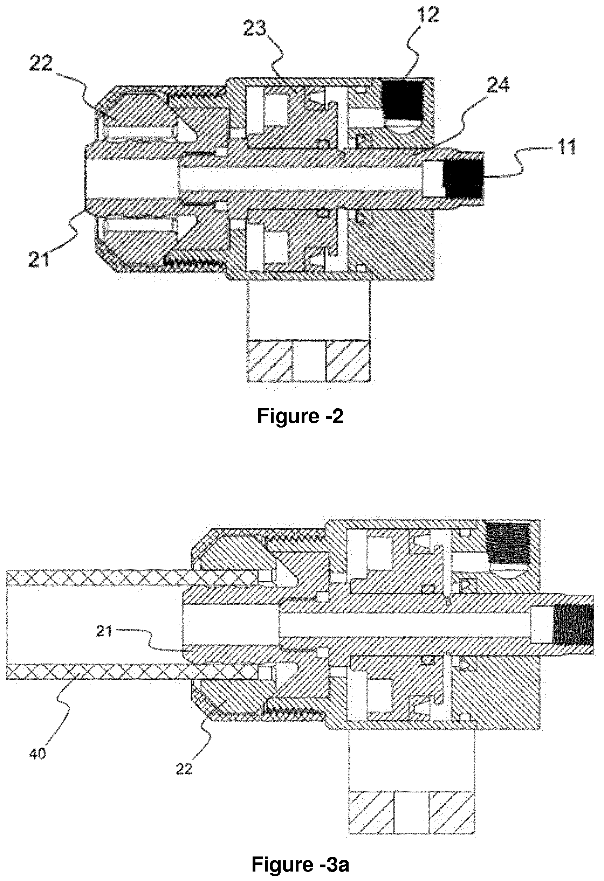

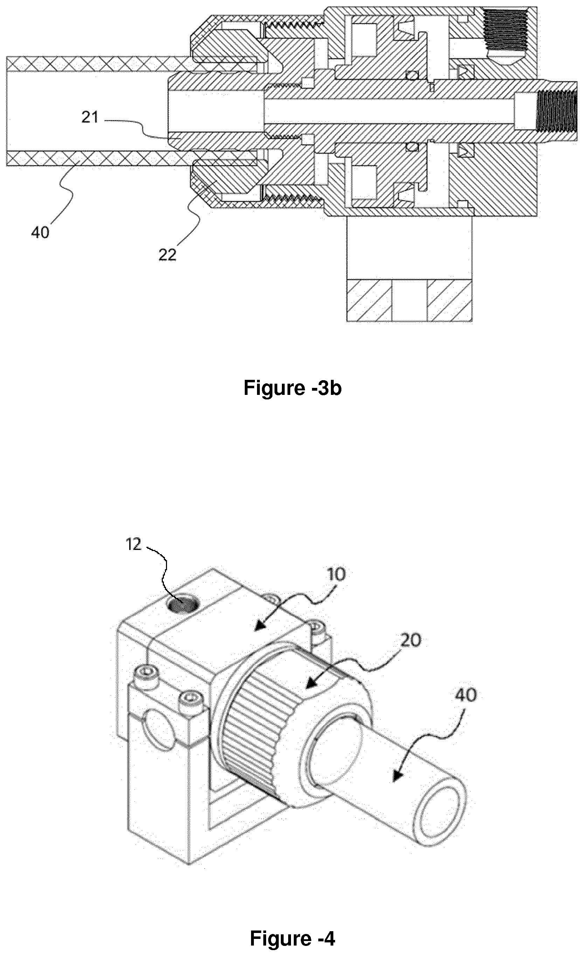

As seen in figure 2, the hose connection mechanism (20) comprises a clamp mechanism (21) to which the hose (40) is connected. After being attached to the clamp mechanism (21), the hose (40) is fixed by clamp pressing parts (22). Preferably, four clamp pressing parts (22) are used. Thereby, a tighter connection between the hose (40) and the clamp mechanism (21) is established by clamping the clamp mechanism (21) easily on four sides by the clamp pressing parts (22). Figure 3a shows the before being clamped by clamp pressing parts (22). On the other hand, figure 3b shows the hose (40) when it is clamped by clamp pressing parts (22). Accordingly, after being attached to the clamp mechanism (21), the hose (40) is clamped by clamp pressing parts (22). Clamping is established by means of a piston (23). The piston (23) pushes a piston shaft (24) using compressed air. The piston shaft (24) drives the clamp mechanism (21) using the pushing force received from the piston (23). Therefore, sealing is achieved by completely clamping the hose (40).

Figure 4 shows a general view of the invention when a hose is attached. The control device is connected to a compressed air source in order to check the hose (40). The compressed air is supplied through a first air inlet port (11) introduced on the main frame (10). The compressed air is fed into the main frame (10) by connecting the compressed air source to the first air inlet port (11). An air hose (40) from the air directional control valve is connected to a second air inlet port (12) introduced on the same main frame (10). In order to establish air circulation, an automated or manually operated air directional control valve is started. The motion of the piston (23) inside the product is achieved by means of the compressed air supplied through the air directional control valve. The piston shaft (24) which has been pushed forward by the displacement of the piston (23) results in the clamp mechanism (21) to be clamped. Furthermore, when used in combination with a pressure regulator, the clamp mechanism (21) and clamp pressing parts (22) can clamp the hose (40).

The testing equipments of the invention allows performing testing operations without requiring manual labor. Therefore, time losses are prevented and checking process is completed in minimum duration.

## Claims

1. A leak detection apparatus for hoses (40) comprising a main frame (10) in order to check the hose (40) for leaks by attaching it to a compressed air source, **characterized by comprising;**
• a hose connection mechanism (20) which establishes the connection of the hose (40) intended to be checked into the main frame,
• a clamp mechanism (21) which clamps the hose (40) after being attached to the hose connection mechanism (20),
• a piston (23) which drives the clamp mechanism (21) with the air received from the compressed air source in order to ensure clamping of the hose by the clamp mechanism (21).

2. A leak detection apparatus for hoses (40) according to claim 1, wherein **characterized by comprising;** clamp pressing parts (22) which fixes the hose (40) in order to establish clamping of the hose (40) by the clamp mechanism (21).

3. A leak detection apparatus for hoses (40) according to claim 1, **characterized by comprising;** a piston shaft (24) which transmits the pushing force from the piston (23) to the clamp mechanism (21) in order to establish clamping of the hose (40).

4. A leak detection apparatus for hoses (40) according to claim 1, **characterized by comprising;** a support mechanism (30) which allows the main frame (10) and the hose connection mechanism (20) to be set at the desired angle and position.

5. A leak detection apparatus for hoses (40) according to claim 1, **characterized by comprising;** a first air inlet port (11) through which the compressed air from the compressed air source, which is required for the system's operation, is fed into the main frame (10).

6. A leak detection apparatus for hoses (40) according to claim 1, **characterized by comprising;** a second air inlet port (12) through which the compressed air from the compressed air source is fed to the piston (23) inside the main frame (10) in order to ensure the forward displacement of the piston shaft (24).
